Europäisches Patentamt

European Patent Office

Office européen des brevets

(19)

(11) Veröffentlichungsnummer : **0 182 211**
**B1**

(12)

# EUROPÄISCHE PATENTSCHRIFT

(45) Veröffentlichungstag der Patentschrift :
02.11.89

(21) Anmeldenummer : 85114184.6

(22) Anmeldetag : 07.11.85

(51) Int. Cl.⁴ : **B 29 C 47/32**, B 29 C 59/04

(54) Extrusionsdüse.

(30) Priorität : 20.11.84 DE 3442393

(43) Veröffentlichungstag der Anmeldung :
28.05.86 Patentblatt 86/22

(45) Bekanntmachung des Hinweises auf die Patenterteilung : 02.11.89 Patentblatt 89/44

(84) Benannte Vertragsstaaten :
AT BE CH DE FR GB IT LI LU NL SE

(56) Entgegenhaltungen :
AU–A– 245 823
DE–B– 1 207 612
DE–C– 624 494
US–A– 1 932 821
US–A– 2 075 735
US–A– 2 226 768
PLASTICS ENGINEERING, Band 36, Nr. 6, Juni 1980,
Seiten 34,35, Manchester, New Hampshire, US; P.
HAMEL: "How to extrude embossed flexible profiles"

(73) Patentinhaber : Gebrüder Kömmerling Kunststoffwerke GmbH
Zweibrücker Strasse 200
D-6780 Pirmasens (DE)

(72) Erfinder : Czekay, Dieter
Mathildenstrasse 9-11
D-6780 Pirmasens (DE)

(74) Vertreter : Dipl.-Ing. Schwabe, Dr. Dr. Sandmair, Dr.
Marx
Stuntzstrasse 16
D-8000 München 80 (DE)

## Beschreibung

Die Erfindung betrifft eine Extrusionsdüse zur Extrusion eines Kunststoff-Profilstranges mit mindestens einer Sichtfläche aus in einem Extruder plazifizierten Kunststoff, vorzugsweise eines Hohlprofilstabes, der im Oberbegriff des Anspruchs 1 angegebenen Gattung.

Ein solche Extrusionsdüse geht aus der Veröffentlichung « How to extrude embossed flexible profiles » in Plastics Engineering, Band 36, Nr. 6, Juni 1980, Seiten 34, 35 hervor und weist einen an der Stirnfläche der Düse in eine Düsenöffnung mündenden Düsenkanal, dessen Querschnittsprofil im wesentlichen jenem des Profilstabes entspricht und dessen ortsfeste Begrenzungswände eine die Sichtfläche formende Formwand und eine dieser gegenüberliegende, mit dieser einen Düsenspalt bildende Gegenwand aufweisen, sowie einen umlaufenden Prägekörper auf, dessen mit einem reliefartigen Prägemuster versehene Prägefläche in einem Eingriffsbereich den Düsenspalt verlängert und der in dem an die Düsenöffnung angrenzenden Abschnitt der Formwand angeordnet ist und dessen Prägefläche in der Extrusionsrichtung mit dem Extrudat mitwandert.

Weiterhin ist es aus der US-A-2 075 735 bekannt, den Prägekörper als endloses, flexibles, umgelenktes Prägeband auszubilden, dessen Außenoberfläche das Prägemuster aufweist und das über einen vorzugsweise als eine Rolle ausgebildeten, in der Formwand angeordneten Andruckkörper umläuft, der vorzugsweise seinerseits eine zylindrische Umfangsfläche aufweist. Das Prägeband weist einen eigenen Antrieb auf und kann gekühlt werden. Dabei werden die Formwand und die Gegenwand durch zwei umlaufende, über Rollen geführte Endlosbänder geführt, die gegebenenfalls auch mit einem Prägemuster versehen sein können. Diese umlaufenden Endlosbänder dienen also als « Formwerkzeug », das sich mit dem Extrudat mitbewegt und gleichzeitig einen Formdruck auf das Extrudat ausübt.

Der Erfindung liegt die Aufgabe zugrunde, eine Extrusionsdüse der angegebenen Gattung zu schaffen, die mit einem einfach herzustellenden Prägekörper ausgebildet ist.

Diese Aufgabe wird erfindungsgemäß durch die im kennzeichnenden Teil des Anspruchs 1 angegebenen Merkmale gelöst.

Zweckmäßige Ausgestaltungen dieser Extrusionsdüse werden durch die Merkmale der Unteransprüche definiert.

Die mit der Erfindung erzielten Vorteile beruhen auf der relativ einfachen Herstellung eines solchen Prägebandes, wobei die gegebenenfalls geringere Verschleißbeständigkeit durch eine größere Länge des Prägebandes wieder ausgeglichen werden kann. Soll die Extrusionsdüse auf die Ausführung eines anderen Prägemusters umgestellt werden, so muß nicht die Prägewalze, sondern nur das Prägeband ausgetauscht werden, was in einem relativ einfachen Schritt möglich ist, da hierzu das Lager des Prägebandes nicht demontiert werden muß, wie es bei der gattungsgemäßen, aus Plastics Engineering bekannten Extrusionsdüse der Fall ist. Und schließlich hat das Prägeband auch den besonderen Vorteil, daß der Rapport des in die Sichtfläche eingeprägten Musters mit einfachen Mitteln größer gehalten werden kann.

Eine solche Extrusionsdüse kann auch zur Herstellung von geschäumten Profilen eingerichtet werden, insbesondere zur Herstellung von « Integralschaumprofilen », bei denen die Schaumschicht an den Begrenzungswänden der Düse zu einer geschlossenen Haut verdichtet wird, aber auch zur gleichzeitigen Extrusion mehrerer, gegebenenfalls unterschiedlicher Kunststoffe.

Da die Prägung der Oberflächenstruktur noch während der Extrusion stattfindet, ist keinerlei gesonderter Arbeitsgang erforderlich. Vielmehr verläßt die Extrusionsdüse ein fertig strukturierter Voll- oder Hohlprofilstab, gegebenenfalls auch ein flexibles Band oder ein Schlauch, und zwar mit bester Maßhaltigkeit.

Wird als aufzuprägendes Muster eine Holzstruktur ausgewählt, die sich über große Längen erstreckt, so bietet ein Prägeband besondere Vorteile, da sich seine Schlaufe praktisch beliebig verlängern läßt.

Ein solches Prägeband kann aus Metall, Kunststoff, Papier, textilen Materialien oder Kombinationen dieser Materialien gebildet sein. Soweit diese Materialien eine vergleichsweise geringe Lebensdauer haben, kann auch ein nur einmal verwendbares, von einer Vorratsrolle abzuziehendes Prägeband eingesetzt werden.

Es ist möglich und manchmal auch von Vorteil, das Prägeband durch den vorbeigepreßten Kunststoff anzutreiben. Dort, wo z. B. der Antriebswiderstand der Prägefläche des Prägebandes besonders hoch ist, etwa im Falle eines Prägeband-Umlenkmechanismus, aber auch dann, wenn der Kunststoff beim Verlassen der Extrusionsdüse noch besonders nachgiebig und plastisch ist, sollte dem Prägeband ein eigener Antrieb zugeordnet werden. Dieser Antrieb wird entweder durch Kopplung mit dem Antrieb des Extruders oder über einen Meß- und Regelmechanismus genau auf die Extrusionsgeschwindigkeit abgestimmt, so daß das Prägeband eine optimale Geschwindigkeit hat. Diese Geschwindigkeit kann vorteilhaft gleich der Extrusionsgeschwindigkeit bzw. der Abzugsgeschwindigkeit des extrudierten Profilstabes sein.

Zum Verbessern der Prägeeffekte, besonders bei Verwendung einer besonders tiefen Prägestruktur, kann es jedoch auch vorteilhaft sein, die Geschwindigkeit des Prägebandes gegenüber der Abzugsgeschwindigkeit leicht vor- oder nacheilen zu lassen. Wesentlich ist nur, daß der Antrieb so ausgebildet ist, daß er das als optimal erkannte und eingestellte Geschwindigkeitsverhältnis zwi-

schen Oberfläche des Prägebandes und Kunststoff stets beibehält.

Es ist im Prinzip möglich und bei vielen Prägemustern auch sinnvoll und wegen des einfachen Aufbau vorteilhaft, keine zwangsweise wirksame Temperatursteuerung des Prägebandes durchzuführen, so daß das Prägeband beim Betrieb die Temperatur der benachbarten Düsenteile und des Kunststoffes hat. Hierbei erzielt man eine relativ flache und feinkonturierte Prägung.

Wenn aber bspw. ein tieferes Prägebild angestrebt wird, ist es von Vorteil, gemäß einer weiteren Ausgestaltung das Prägeband zu kühlen, bspw. über den das Prägeband im Bereich des Düsenspaltes abstützenden Andruckkörper. Besteht das Prägeband aus einem Material mit entsprechender Wärmeaufnahmefähigkeit, so läßt sich das Prägeband auch außerhalb der eigentlichen Extrusionsdüse kühlen.

In manchen Fällen kann sich durch Erwärmung der Prägefläche der Mustereffekt günstig beeinflussen lassen.

Der Prägebereich kann gegenüber dem mündungsseitigen Ende der Gegenwand entgegen der Extrusionsrichtung versetzt sein. Dieser Berührungsbereich wird meistens die Form eines schmalen Berührungsstreifens annehmen, etwa bei Verwendung eines Prägebandes. Gemäß einer weiteren Ausgestaltung beträgt der Abstand zwischen der Düsenstirnfläche und der Mittellinie des schmalen Berührungsstreifens nicht mehr als 50 mm, vorzugsweise nicht mehr als 10 mm.

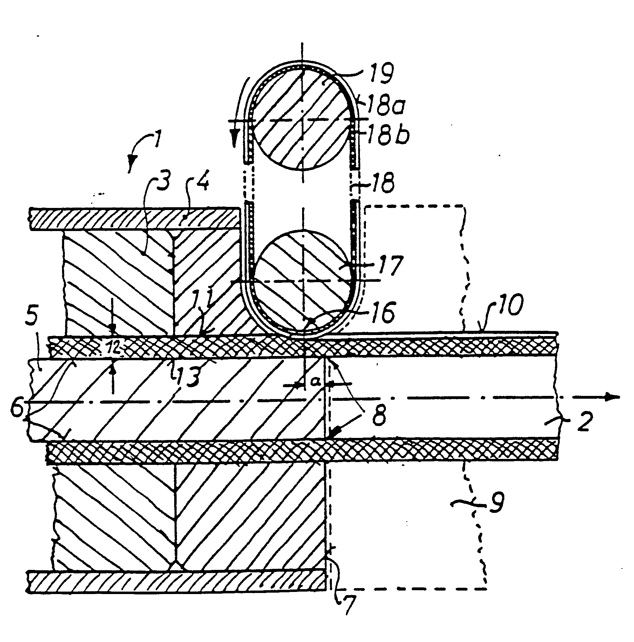

Die Erfindung wird im folgenden anhand der beiliegenden, schematischen Zeichnungen näher erläutert, deren einzige Figur einen Längsschnitt durch eine erfindungsgemäße Extrusionsdüse zeigt.

In der Figur ist schematisch im Längsschnitt eine Extrusionsdüse 1 zur Extrusion eines Hohlprofilstabes 2 in einer Extrusionsrichtung gezeigt, die in der Zeichnung von links nach rechts in Pfeilrichtung erfolgt.

Die Extrusionsdüse 1 weist einen aus mehreren Platten zusammengesetzten Düsenkörper 3 auf, der von einer Heizung 4 ummantelt ist. Der Düsenkörper 3 enthält einen Axialkanal, innerhalb dessen mit Abstand ein sich ebenfalls axial erstreckender Düsenkern 5 angeordnet ist.

Zwischen dem Düsenkörper 3 und dem Düsenkern 5 ist ein Düsenkanal 6 gebildet, der die Querschnittsform beispielsweise eines Rechteckringes aufweist.

Der Düsenkörper 3 und der Düsenkern 5 enden, quer zur durch einen Pfeil bezeichneten Extrusionsrichtung gesehen, bevorzugt auf gleicher Höhe und bilden eine Stirnfläche 7. In die Stirnfläche 7 mündet der Düsenkanal 6 unter Bildung einer Düsenöffnung 8 ein.

An die Stirnfläche 7 schließt, in Extrusionsrichtung gesehen, eine Kühl- und Kalibriereinrichtung 9 an, welche in der Figur nur gestrichelt gezeigt ist.

Die, in der Figur obere, sich quer zur Bildebene erstreckende Fläche des Hohlprofilstabes 2 bildet eine strukturierte Sichtfläche 10, in die ein Muster eingeprägt ist.

Der Düsenkanal 6 wird von ortsfesten Begrenzungswänden gebildet, die von den einander gegenüberliegenden Flächen des Düsenkörpers 3 und des Düsenkernes 5 dargestellt werden. Von diesen Begrenzungsflächen ist mit 11 eine Formfläche bezeichnet, die zur Formgebung jener Außenoberfläche des Hohlprofilstabes 2 dient, welche die Sichtfläche 10 bilden soll.

Der Formfläche 11 liegt eine Gegenfläche 13 gegenüber, die vom Düsenkern 5 gebildet ist. Zwischen der Formfläche 11 und der Gegenfläche 13 ist ein Düsenspalt 12 gebildet, der einen Teil des Düsenkanals 6 darstellt.

Der in der Figur oben liegende Teil des Düsenkörpers 3 und der zugehörigen Beheizung 4 erstreckt sich nicht bis zur Stirnfläche hin, sondern ist gegenüber dieser um ein Stück entgegen der Extrusionsrichtung zurückgesetzt. In diesem Bereich ist eine um ihren Drehpunkt drehbar gelagerte Umlenkrolle 17 angebracht, über welche ein flexibles Prägeband 18 läuft, das seinerseits eine reliefartige Struktur aufweist, die zum Einprägen des Musters in die Sichtfläche 10 erforderlich ist.

Dieses Prägeband weist eine Kopffläche 18a auf, welche von den höchsten Erhebungen des reliefartigen Musters gebildet ist, sowie eine Fußebene 18b, in welcher die tiefsten Punkte des Musters liegen.

Das Prägeband 18 taucht, während es um die Umlenkrolle 17 in Pfeilrichtung läuft, mit der gesamten Mustertiefe in den Düsenspalt 12 ein, so daß die Fußebene 18b des Prägebandes 18 gerade die gedachte Verlängerung der Formfläche 11 längs einer Berührungslinie 16 berührt, deren Abstand a erheblich kleiner ist als der Halbmesser der Kopffläche 18a, so daß das Prägeband 18 die Stirnfläche 7 in Extrusionsrichtung überragt.

Das Prägeband 18 läuft außerhalb der Extrusionsdüse 1 um eine Umlenkanordnung, die eine zweite Umlenkrolle 19 und gegebenenfalls noch mehrere Rollen aufweisen kann, wobei die Länge der vom Prägeband 18 gebildeten, geschlossenen Schlaufe der Länge jenes Musters entspricht, das auf der Sichtfläche 10 des hergestellten Hohlprofilstabes 2 abgebildet wird.

Der Düsenkanal 6 endet an seinem von der Düsenöffnung 8 abgewandten, in der Zeichnung nicht gezeigten Ende in einem Extruderanschluß, an welchen ein bekannter Extruder angeschlossen ist, der seinerseits den Kunststoff plastifiziert und in diesem plastifizierten Zustand in die Extrusionsdüse 1 einpreßt.

Das Prägeband 18 ist unbeheizt, da es nicht vom Heizmantel überdeckt wird. Es kann zusätzlich gekühlt werden.

Das Prägeband 18 kann einen eigenen Antrieb aufweisen, der in Abhängigkeit von der Extrusionsgeschwindigkeit so einstellbar ist, daß die Umfangsgeschwindigkeit des Prägebandes 18 genau oder nahezu gleich der Extrusionsgeschwindigkeit ist. Eine kleine Vor- oder Nacheilung des Prägebandes 18 gegenüber dem Hohlprofilstab 2 kann in Abhängigkeit von der Formgebung und Tiefe des in die Sichtfläche 10 einzuwalzenden Musters in manchen Fällen zweckmäßig sein.

Die Kalibriereinrichtung 9, die an die Stirnfläche 7 angrenzt, kann ihrerseits eine Ausnehmung aufweisen, mittels welcher sie den die Stirnfläche 7 überragenden Teil des Prägebandes 18 umgreifen kann.

## Patentansprüche

1. Extrusionsdüse (1) zur Extrusion eines Kunststoff-Profilstabes (2) mit mindestens einer Sichtfläche (10) aus in einem Extruder plastifizierten Kunststoff, vorzugsweise eines Hohlprofilstabes, mit einem an der Stirnfläche der Düse in eine Düsenöffnung (8) mündenden Düsenkanal (6), dessen Querschnittsprofil im wesentlichen jenem des Profilstabes entspricht, und dessen ortsfeste Begrenzungswände eine die Sichtfläche (10) formende Formwand (11) und eine dieser gegenüberliegende, mit dieser einen Düsenspalt bildende Gegenwand (13) aufweisen, und mit einem umlaufenden Prägekörper (18), dessen mit einem reliefartigen Prägemuster versehene Prägefläche in einem Eingriffsbereich (16) den Düsenspalt verlängert und der in dem an die Düsenöffnung (8) angrenzenden Abschnitt der Formwand angeordnet ist, und dessen Prägefläche in Extrusionsrichtung mit dem Extrudat mitwandert, gekennzeichnet durch die folgenden Merkmale : der Prägekörper ist als endloses, flexibles, umgelenktes Prägeband (18) ausgebildet, dessen Außenoberfläche (18a, 18b) das Prägemuster aufweist; und das Prägeband (18) läuft über einen als zylindrische Rolle (17) ausgebildeten, in der Formwand (11) angeordneten Andruckkörper um, und daß, in Extrusionsrichtung gesehen, der Eingriffsbereich (16) bevorzugt gegenüber dem in der Stirnfläche (7) liegenden Ende der Gegenwand (13) zurückversetzt ist.

2. Extrusionsdüse nach Anspruch 1, dadurch gekennzeichnet, daß das Prägeband (18) aus Metall, Kunststoff, Papier, textilem Material oder Kombinationen dieser Materialien gebildet ist.

3. Extrusionsdüse nach einem der Ansprüche 1 oder 2, gekennzeichnet durch einen eigenen Antrieb für das Prägeband (18).

4. Extrusionsdüse nach einem der Ansprüche 1 bis 3, dadurch gekennzeichnet, daß das Prägeband (18) gekühlt ist.

5. Extrusionsdüse nach einem der Ansprüche 1 bis 4, dadurch gekennzeichnet, daß das Prägeband (18) im wesentlichen mit einer Umfangsgeschwindigkeit angetrieben ist, die gleich der Extrusionsgeschwindigkeit ist.

6. Extrusionsdüse nach einem der Ansprüche 1 bis 4, dadurch gekennzeichnet, daß das Prägeband (18) mit einer Umfangsgeschwindigkeit angetrieben ist, die etwas größer oder kleiner als die Extrusionsgeschwindigkeit ist.

7. Extrusionsdüse nach einem der Ansprüche 1 bis 6, dadurch gekennzeichnet, daß der Prägebereich des Prägebandes (18) als quer zur Extrusionsrichtung verlaufender Berührungsstreifen mit einer mittleren Berührungslinie (16) ausgebildet ist, und daß der Abstand (a) zwischen der Berührungslinie (16) und der Stirnfläche (7) der Extrusionsdüse (1) bis zu 50 mm, vorzugsweise bis zu 10 mm, beträgt.

## Claims

1. An extrusion die (1) for the extrusion of a plastics profiled rod (2) having at least one visible face (10) from plastics material plasticized in an extruder, preferably of a hollow profiled rod, having a die approach (6) leading into a die orifice (8) at the front face of the die, the cross-sectional profile of which approach corresponds substantially to that of the profiled rod, and the stationary boundary walls of which comprise a shaping wall (11) shaping the visible face (10) and a backing wall (13) situated opposite the shaping wall and forming a die orifice with it, and having a rotating embossing member (18), of which the embossing surface provided with a relief-like pattern to be embossed lengthens the die orifice in an engagement region (16) and which is disposed in the portion of the shaping wall adjoining the die opening (8), and the embossing surface of which travels in the extrusion direction with the extrudate, characterised by the following features : the embossing member is constructed in the form of an endless, flexible, returned embossing band (18), the outer surface (18a, 18b) of which comprises the pattern to be embossed ; and the embossing band (18) circulates over a pressure member constructed in the form of a cylindrical roller (17) and disposed in the shaping wall (11), and that, seen in the extrusion direction, the engagement region (16) is preferably set back in relation to the end of the backing wall (13) lying in the end face (7).

2. An extrusion die according to Claim 1, characterised in that the embossing band (18) is formed from metal, plastics material, paper, textile material or combinations of these materials.

3. An extrusion die according to either of the Claims 1 or 2, characterised by its own drive for the embossing band (18).

4. An extrusion die according to any one of Claims 1 to 3, characterised in that the embossing band (18) is cooled.

5. An extrusion die according to any one of Claims 1 to 4, characterised in that the embossing band (18) is driven substantially at a peripheral speed which is the same as the extrusion speed.

6. An extrusion die according to any one of Claims 1 to 4, characterised in that the embossing band (18) is driven at a peripheral speed which is somewhat higher or lower than the extrusion speed.

7. An extrusion die according to any one of Claims 1 to 6, characterised in that the embossing region of the embossing band (18) is in the form of contact strips extending transversely to the extrusion direction and having a central contact line (16), and that the distance (a) between the contact line (16) and the front face (7) of the extrusion die (1) amounts to up to 50 mm, preferably up to 10 mm.

## Revendications

1. Filière d'extrusion (1) pour l'extrusion d'une barre profilée en matière plastique (2), de préférence une barre profilée creuse, qui comprend au moins une surface (10) destinée à être vue, à partir d'une matière synthétique plastifiée dans une extrudeuse, comprenant un canal d'alimentation (6) débouchant dans la surface frontale de la filière par un orifice de filière (8) dont la section transversale correspond sensiblement à celle de la barre profilée et dont les parois limites fixes présentent une paroi de formage (11) formant la surface (10) destinée à être vue et une contre-surface (13) opposée à celle-ci et formant avec celle-ci un entrefer de filière, et un organe de gaufrage (18) rotatif, dont la surface de gaufrage munie d'un motif de gaufrage en relief prolonge l'entrefer de filière dans une région de contact (16) et qui est disposé dans la section de la paroi de formage voisine de l'orifice de filière (8), et dont la surface de gaufrage se déplace dans la direction de l'extrusion avec l'extrudat, caractérisée en ce que l'organe de gaufrage est réalisé sous la forme d'une bande de gaufrage (18) sans fin, flexible et tournante, dont la surface extérieure (18a, 18b) comprend le motif de gaufrage, que la bande de gaufrage (18) passe autour d'un élément de pression conformé en rouleau cylindrique (17) monté dans la paroi de formage (11), et que, vue dans la direction de l'extrusion, la région de contact (16) est de préférence décalée vers l'arrière par rapport à l'extrémité de la contre-paroi (13) située au niveau de la surface frontale (7).

2. Filière d'extrusion selon la revendication 1, caractérisée en ce que la bande de gaufrage (18) est constituée de métal, de matière plastique, de papier, de matière textile ou d'une combinaison de ces matériaux.

3. Filière d'extrusion selon l'une des revendications 1 ou 2, caractérisée en ce que la bande de gaufrage (18) comprend un dispositif d'entraînement qui lui est propre.

4. Filière d'extrusion selon l'une des revendications 1 à 3, caractérisée en ce que la bande de gaufrage (18) est refroidie.

5. Filière d'extrusion selon l'une des revendications 1 à 4, caractérisée en ce que la bande de gaufrage (18) est entraînée à une vitesse périphérique qui est sensiblement égale à la vitesse d'extrusion.

6. Filière d'extrusion selon l'une des revendications 1 à 4, caractérisée en ce que la bande de gaufrage (18) est entraînée à une vitesse périphérique qui est légèrement plus grande ou légèrement plus faible que la vitesse d'extrusion.

7. Filière d'extrusion selon l'une des revendications 1 à 6, caractérisée en ce que la région de gaufrage de la bande de gaufrage (18) est constituée par une bande de contact disposée transversalement à la direction de l'extrusion et comprenant une ligne de contact centrale (16), et que la distance (a) entre la ligne de contact (16) et la surface frontale (7) de la filière d'extrusion (1) a une dimension pouvant atteindre jusqu'à 50 mm et de préférence jusqu'à 10 mm.